## Europäisches Patentamt

## European Patent Office

## Office européen des brevets

(11) Publication number: **0 133 150**
**B1**

(12) **EUROPEAN PATENT SPECIFICATION**

(45) Date of publication of patent specification: **09.09.87**

(21) Application number: **84630104.2**

(22) Date of filing: **24.07.84**

(51) Int. Cl.⁴: **B 60 C 3/02**, B 60 C 17/06

(54) **Closed torus tire.**

(30) Priority: **25.07.83 US 517109**

(43) Date of publication of application:
**13.02.85 Bulletin 85/07**

(45) Publication of the grant of the patent:
**09.09.87 Bulletin 87/37**

(84) Designated Contracting States:
**DE FR GB IT**

(56) References cited:
**CH-A- 322 114**
**FR-A-1 339 611**
**GB-A- 344 383**
**US-A-3 318 357**
**US-A-3 606 921**
**US-A-3 776 792**

(73) Proprietor: **THE GOODYEAR TIRE & RUBBER
COMPANY
1144 East Market Street
Akron, Ohio 44316-0001 (US)**

(72) Inventor: **Crossmann, Richard Lloyd
386 Mark Drive
Tallmadge Ohio 44278 (US)**

(74) Representative: **Weyland, Joseph Jean Pierre
Goodyear Technical Center Luxembourg Patent
Department Avenue Gordon Smith
L-7750 Colmar-Berg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background of the Invention

The present invention relates generally to closed torus tires, and more specifically to closed torus tires having runflat structures incorporated therein.

It is known in the tire art to replace a runflat structure inside of a conventional, open U-shaped pneumatic tire to enable the tire to be operated on a vehicle if the tire should become uninflated. Closed torus tires, sometimes referred to by persons working in the tire art as tube tires or torus tires, are not easily fitted with separate runflat structures because the carcass of a closed torus tire defines a closed inflation chamber. Therefore, it is more preferable to provide a closed torus tire with a runflat device that is integral thereto.

United States Patent 909,962, issued to Swinehart, discloses a closed torus tire with an integral runflat structure comprising in radial cross-section a triangular rib with an apex pointing radially outwardly. This particular closed torus tire was intended for mounting on a clincher type rim, so it has no roll-restraining hoop portions like the present invention. United States Patent 3,606,921, issued to Grawey and corresponding to the preamble of claim 1, illustrates the same type of integral triangular structure as the Swinehart patent in a close torus tire that has roll-restraining hoop portions. However, the "internal elastomer bumper" of the Grawey tire extends radially outwardly of the roll-restraining hoop portions and the shape of the "bumper" would localize the load carried by the tire over a very small area in the event that the tire should become uninflated during use.

The Swinehart and Grawey tires leave several problems unsolved. When a closed torus tire becomes uninflated during the use the entire load carried by the tire would be placed on a relatively small area of the "bumper" or runflat structure such that only a narrow strip at the center of the tire tread would be held firmly against the ground or road, with unsatisfactory handling and traction results. Furthermore, the concentration of stresses on a very small area of the triangular structure and the tread will result in rapid deterioration of both the triangular structure and the tread, especially if the tire is operated at high speeds, such as when an aircraft is taking off or landing. In the absence of any type of runflat structure, either the sidewalls of the tire will wear against the rim flanges or, if the tire is mounted on a flangeless rim, the interior of the crown area of the tire will wear against the roll-restraining hoop portions. In any of the foregoing situations, the tire will be ruined because of the stress concentrations, and if the ruined tire should become demounted from the rim, the rim and the suspension system of the vehicle itself could be damaged.

A closed torus tire according to the present invention has an integral circumferential rib member protruding radially outwardly from the annular base region of the tire's carcass. The radially outer circumferential surface of this rib member is cylindrical and is disposed at the same distance from a radially outer surface of the annular base region of the carcass, as measured in a radial direction, as the radially outer circumferential surfaces of the roll-resisting hoop portions of the tire. The radial height of the rib member is critical because it allows the load on the tire to be spread over a larger area, comprising the radially outer surfaces of both the rib and the roll-restraining hoop portions, in the event the tire becomes uninflated during use. By restricting deterioration of the tire so that the tire tends to remain mounted on the rim, the invention restricts damage to the rim, wheel, suspension system and related structures also. It is understood that even though the tire may be rendered unfit for further use if the vehicle is operated at high speed of over a considerable distance while uninflated, the cost of replacing a tire is overshadowed by the cost of replacing damaged rims, wheels and suspension system components.

While the invention is believed to be especially advantageous when employed in an aircraft tire, it is understood that it may be employed in tires for automobiles, trucks, buses and off-the-road vehicles with satisfactory results. Aircraft tires are known to fail most frequently during take-off, and therefor landing on an uninflated tire and subsequent taxiing may be unavoidable, with costly results if the tire deteriorates and becomes demounted.

There is provided in accordance with the invention a closed torus pneumatic tire comprising a carcass defining a toroidal-like closed inflation chamber, said carcass having an annular base region with a radially outer surface and with a roll-restraining hoop portion located at each axial end of said annular base region, each roll-restraining hoop portion having a radially outer circumferential surface; and a circumferentially extending rib member protruding radially outwardly from said annular base region, said rib member having a radially outer circumferential run-flat surface, wherein the said run-flat surface is cylindrical and is disposed at the same distance from the radially outer surface of said annular base region, as measured in a radial direction, as the radially outer circumferential surfaces of said roll-restraining hoop portions.

### Brief Description of the Drawings

The features of the present invention which are believed to be novel are set forth with particularity in the appended claims. The present invention, both as to its structure and manner of operation, may best be understood by reference to the following description, taken in accordance with the accompanying drawings in which:

Fig. 1 is a radial cross-sectional view of a closed torus pneumatic tire, according to one embodiment of the invention, mounted on a rim;

Fig. 2 is a fragmentary radial cross-sectional view of a closed torus tire, according to another embodiment of the invention, mounted on a rim; and

Fig. 3 is a graph of compressive stress versus shape factor for rubber of various hardnesses at 20% deflection.

## Detailed Description of the Invention

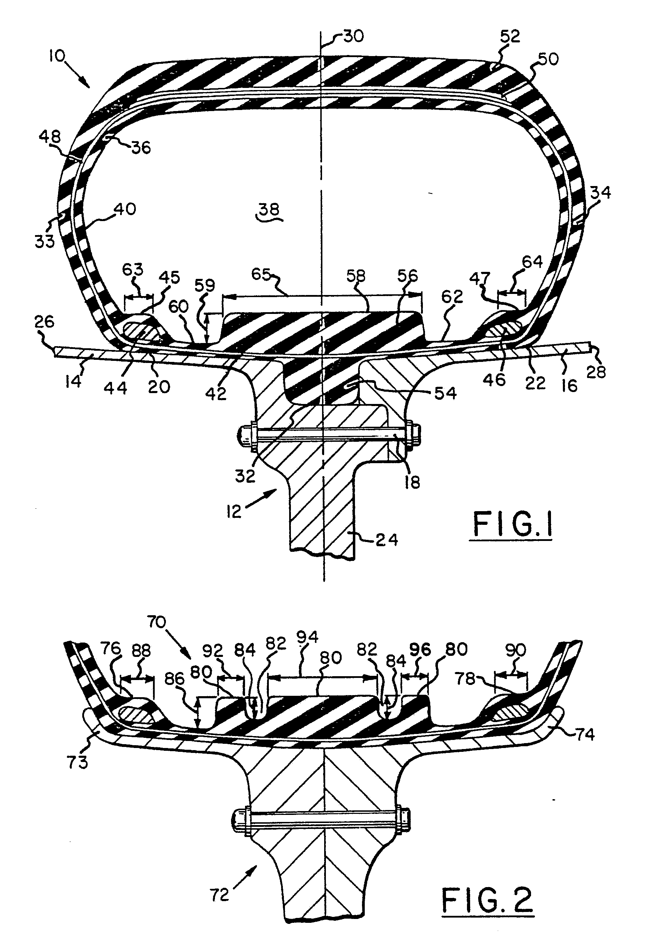

Referring to Fig. 1, there is shown a closed torus pneumatic tire 10, in accordance with the preferred embodiment of the invention, mounted upon a rim 12 to manufacture a tire and rim assembly. The rim 12 comprises a pair of annular rim base members 14, 16 abutting one another in a side by side relationship and fastened together by a means for fastening 18, such as a plurality of rivets or threaded fasteners. Each rim base member has a radially outer surface 20, 22. One of the rim base members should have either a flange for attaching a wheel to the rim or a complete wheel 24 integral therewith.

The rim 12 has a pair of axially outer ends 26, 28. As used herein, and in the appended claims, "axial" and "axially" refer to directions parallel to the axis of rotation of a rim, tire, or tire and rim assembly; and "radial" and "radially" refer to directions that are perpendicular to the axis of rotation of a rim, tire, or tire and rim assembly. "Radially inwardly" refers to a radial direction going towards said axis of rotation and "radially outwardly" refers to a radial direction going away from said axis of rotation. The centerplane 30 of the rim, which is coplanar with the centerplane of the tire and rim assembly, is located equidistant from the axially outer ends of the rim and is oriented perpendicular to the axis of rotation of the rim and assembly.

The radially outer surfaces 20, 22 of the rim base members 14, 16 are separated from one another by an annular groove 32 that is symmetrical with respect to the centerplane of the rim and assembly.

A closed torus tire 10 according to the invention is shown mounted upon the rim in the drawing. The tire has a "mid-circumferential centerplane" 30 that is located midway between the sidewalls of the tire and perpendicular to the axis of rotation of the tire, and the tire and rim assembly. It is understood that when a tire according to the invention is mounted upon a rim, the mid-circumferential centerplane of the tire and the centerplane of the assembly are coplanar.

A closed torus pneumatic tire according to the invention comprises a carcass 35 defining a toroidal-like closed inflation chamber 38. Preferably a substantially air impermeable liner 40 comprises the inner layer of the carcass, and air or any other suitable gas is introduced into the inflation chamber through an inflation valve, (not shown), or other suitable means. The carcass comprises an annular base region 42 with a roll-restraining hoop portion 44, 46 located at each axial end of the annular base region. As used herein and in the claims, each roll-restraining hoop portion comprises an annular roll-restraining hoop and the contiguous layers of elastomeric material, and each roll-restraining hoop portion has a radially outer circumferential surface 45, 47 which forms a portion of the interior periphery of the carcass.

The carcass 36 preferably comprises an elastomeric substance and may be reinforced by at least one carcass ply 48 of reinforcing cords, wires or cables. Preferably the reinforcing cords, wires or cables are oriented in a radial, or nearly radial direction, and extend around the entire inflation chamber. However, it is understood that a tire according to the invention could be cast of a suitable material that is devoid of any carcass plies without deviating from the scope of the invention. An annular reinforcing structure 50 may extend around the crown region of the tire, radially outwardly of the carcass ply, and a ground engaging tread portion 52 extends circumferentially about the crown portion of the tire. A pair of sidewalls 33, 34 extend radially inwardly from the axial edges of the tread portion to the respective roll-restraining hoop portions.

A circumferentially extending rib member 56 protrudes radially outwardly from the annular base region of the carcass and is integral therewith. Preferably this radially outwardly protruding rib member is symmetrical with respect to the mid-circumferential plane of the tire. The radially outwardly protruding rib member has a radially outer circumferential surface 58 that is cylindrical and disposed at the same distance 59 from a radially outer surface 60, 62 of the annular base region, as measured in a radial direction, as the radially outer circumferential surfaces 45, 47 of the roll-restraining hoop portions.

In the preferred embodiment of the invention, the closed torus tire 10 further comprises a circumferentially extending rib member 54 protruding radially inwardly from the annular base region of the tire carcass and integral therewith. The radially inwardly protruding rib member is preferably symmetrical with respect to the mid-circumferential plane of the tire and has a smaller axial width than the radially outwardly protruding rib member 56. Preferably both of the rib members protruding from the annular base region of the carcass comprise elastomeric materials, although they may comprise other materials selected in accordance with good engineering practices. A tire according to the invention may be manufactured by assembling the material for the rib members with the carcass prior to vulcanizing the tire. The radially inwardly protruding rib member is disposed within the annular groove 32 of the rim, with the annular base region adjacent to the radially outer surfaces of the rim members, and has an axial width when newly molded that is slightly greater than the axial width of the groove so that the rib members will be compressedly secured between the rib base members.

Referring to Fig. 2 there is shown a fragmentary view of another embodiment of a closed torus pneumatic tire 70 according to the invention. The closed torus tire of Fig. 2 does not have a radially inwardly protruding rib member, but is secured to the rim 72 by more conventional means such as side retaining flanges 73, 74, or even adhesive bonding. It should be noted that if a tire according to the invention is intended to be mounted upon a rim having flanges at the axial ends thereof, the radially outer circumferential surfaces 76, 78 of the roll-restraining hoop portions and the radially outer circumferential surface 80 of the radially outwardly protruding rib should be disposed radially outwardly of the rim flanges.

In the event that a closed torus pneumatic tire according to the invention should become uninflated, the radially outwardly protruding rib and the roll-restraining hoop portions act as load members to transfer the load normally supported by the tire to the rim. If the rib protruded radially outwardly of the roll-restraining hoop portions, the entire load would be placed on it, and the deterioration of the tire due to heat and stress would be accelerated due to the concentration of stresses. If the radially outer circumferential surfaces of the roll-restraining hoop portions are disposed radially outwardly of the rib, the entire load would be placed on the roll-restraining hoop portions and deterioration of the tire would be accelerated for the same reasons. Therefor, the disposition of the radially outer circumferential surfaces of the roll-restraining hoop portions and the radially outer circumferential surface of the radially outwardly protruding rib is considered to be a critical aspect of the invention. The axial widths of these surfaces is considered to be a very important aspect of the invention also, because if the sum of their axial widths is excessive the weight and cost of the tire will be unnecessarily high and if the sum of these widths is too small, the rib may flex under loading resulting in accelerated deterioration of the tire.

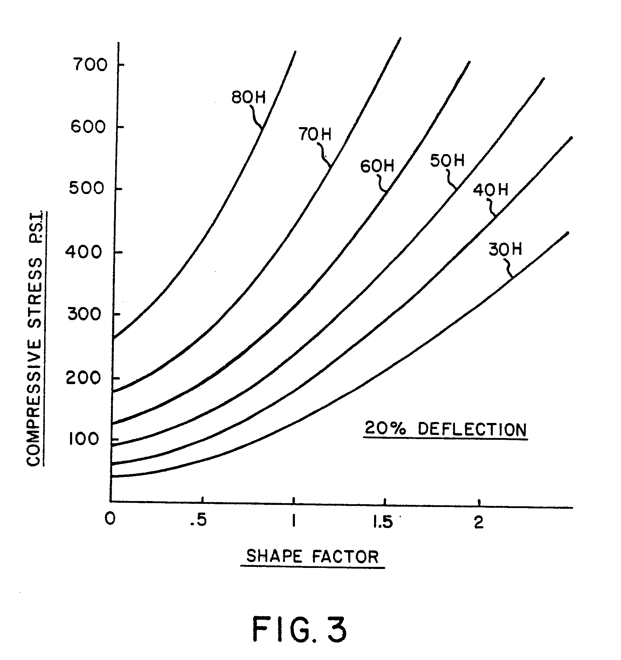

The shape of the load bearing members may affect the compressive stiffness of the elastomeric load bearing members significantly. This concept may be illustrated by referring to Fig. 3, which is a graph showing the effect of shape factor on compressive stress at 20% deflection for rubbers having various degrees of durometer hardness. The curves in Fig. 3 were experimentally generated at normal room temperature and for static or slow speed applications. If desired, similar curves may be experimentally generated for other temperatures and dynamic loading. By "20% deflection", it is meant that a test piece is reduced to 80% of its original height due to loading. Rubber is considered to be basically non-compressible, but the loaded structure bulges at its sides when loaded. By "shape factor" is meant the ratio of the load area (radially outer circumferential surfaces of the rib member and roll-restraining hoop portions) to the free area (radially extending sides of the rib member and roll-restraining hoop portions). In other words, since the invention is concerned with substantially annular load members, the shape factor is the ratio of the sum of the axial widths of the load members to the sum of the radial heights of the load members. It is believed that a tire according to the invention should preferably have load members with a shape factor of between 1.0 and 1.5 in an unloaded condition. It may be observed that, for a load member of a given durometer hardness, the greater the shape factor the greater the compressive stress required to deflect the load member to 80% of its original height. However, if the shape factor becomes too great, the radially outwardly protruding rib member may tend to flex under load and actually contribute to increasing the rate of deterioration of the tire when it is subjected to load under use and in an uninflated condition. The durometer hardness of the rib member and the roll-restraining hoop portions may be selected in accordance with good engineering practice, but it is recommended that the rib member should have substantially the same durometer hardness as the ground engaging tread portion of the tire.

Referring again to Fig. 1, the preferred shape factor criteria may be met if the ratio of: (a) the sum of the axial widths 63, 64 of the radially outer circumferential surfaces of the roll-restraining hoop portions and the axial width 65 of the radially outwardly protruding rib member; to (b) four times the radial distance 59 from the radially outer circumferential surface of the radially outer surface of the annular base region; is between 1.0 and 1.5.

The tire engineer may select the desired load to be supported by a tire according to the invention and divide that load by the compressive stress required to reduce the load members of a given durometer hardness and shape factor to 80 percent of original height in order to determine the required totally axially extending surface area of the load members to support the load. Dividing the required surface area by the circumferentially measured length of the part of the rib member and roll-restraining hoop portions that will be located between the rim and the ground engaging tread of the tire when the uninflated tire is subjected to the desired load will yield the sum of the axial widths of the radially outer circumferential surfaces of the rib member and roll-restraining hoop portions.

Referring to Fig. 2, there is illustrated a means for increasing the shape factor of the load members without increasing their radial height to the extent that flexing of the radially outwardly protruding rib member becomes a problem. The radially outer circumferential surface of the radially outwardly protruding rib member has at least one circumferentially extending groove 82 therein such that said radially outer circumferential surface 80 is divided into a plurality of segments, with respect to the axis of rotation of the tire. Each groove has a radial depth 84 that is less than the radial distance 86 from the radially outer circumferential surface of the rib member to a radially outer surface of the annular base region. The radially outwardly protruding rib member may therefor deform to narrow or close the grooves when the rib member if subjected to a load. Preferably, if circumferential grooves are used to increase the shape factor of the loading member system, that is the outwardly protruding rib member and the roll-restraining hoop portions considered as a load bearing system, then the ratio of:

(a) the sum of the axial widths of the radially outer circumferential surfaces 88, 90 of the roll-restraining hoop portions and the axial widths 92, 94, 96 of the segments of the radially outer circumferential surface of the radially outwardly protruding rib member; to

(b) the sum of four times the radial distance 86 from the radially outer circumferential surface of the said radially outwardly protruding rib member to a radially outer surface of the annular base region, plus two times the sum of the radial depths 84 of the circumferential grooves; is between 1.0 and 1.5.

If desired a lubricating substance, or a lubricating system, may be employed to reduce the friction between the loading member system and the inner periphery of the carcass in the event that the tire is operated under load in an uninflated condition.

## Claims

1. A closed torus pneumatic tire (10) comprising a carcass (36) defining a toroidal-like closed inflation chamber (38), said carcass having an annular base region (42) with a radially outer surface (60, 62) and with a roll-restraining hoop portion (44, 46) located at each axial end of said annular base region (42), each roll-restraining hoop portion having a radially outer circumferential surface (45, 47); and a circumferentially extending rib member (56) protruding radially outwardly from said annular base region (42), said rib member having a radially outer circumferential run-flat surface (58), said tire being characterized in that the said run-flat surface (58) is cylindrical and is disposed at the same distance from the radially outer surface (60, 62) of said annular base region (42), as measured in a radial direction, as the radially outer circumferential surfaces (45, 47) of said roll-restraining hoop portions (44, 46).

2. A closed torus pneumatic tire according to claim 1 further characterized by said radially outwardly protruding rib member (56) being symmetrical with respect to the mid-circumferential plane (30) of said tire.

3. A closed torus pneumatic tire according to claim 2 further characterized by comprising a circumferentially extending rib member (54), that is symmetrical with respect to the mid-circumferential plane of said tire, protruding radially inwardly from said annular base region (42) and having a smaller axial width than said radially outwardly protruding rib member (56).

4. A closed torus pneumatic tire according to any of claims 1, 2 or 3 further characterized by the ratio of:

(a) the sum of the axial widths (63, 64, 65) of the radially outer circumferential surfaces of said roll-restraining hoop portions and said radially outwardly protruding rib member; to

(b) four times the radial distance (59) from the radially outer circumferential surface of said radially outwardly protruding rib member to the radially outer surface (60, 62) of said annular base region (42);

being between 1.0 and 1.5.

5. A closed torus pneumatic tire according to any of claims 1, 2 or 3 further characterized by the radially outer circumferential surface (80) of said radially outwardly protruding rib member having at least one circumferentially extending groove (82) therein such that said radially outer circumferential surface is divided into a plurality of segments with respect to the axis of rotation of said tire, each said groove having a radial depth (84) that is less than the radial distance (86) from the radially outer circumferential surface of said radially outwardly protruding rib member to the radially outer surface (60, 62) of said annular base region (42).

6. A closed torus pneumatic tire according to claim 5 further characterized by the ratio of:

(a) the sum of the axial widths (63, 64) of the radially outer circumferential surfaces of said roll-restraining hoop portions and the axial widths (92, 94, 96) of the segments of the radially outer circumferential surface of said radially outwardly protruding rib member; to

(b) the sum of four times the radial distance (86) from the radially outer circumferential surface of said radially outwardly protruding rib member to a radially outer surface of said annular base region, plus two times the sum of the radial depths (84) of said grooves;

being between 1.0 and 1.5.

## Patentansprüche

1. Geschlossener, torischer Luftreifen (10), mit einer Karkasse (36), die eine torische, geschlossene Aufblaskammer (38) bildet, wobei die Karkasse einen ringförmigen Basisbereich (42) mit einer radial äußeren Fläche (60, 62) und mit einem abrolldämpfenden Ringbereich (44, 46) aufweist, die an jedem axialen Ende des ringförmigen Basisbereiches (42) angeordnet sind, wobei jeder abrolldämpfende Ringbereich eine radial außenliegende Umfangsfläche (45, 47) aufweist und wobei ein sich um den Umfang erstreckendes Rippenelement (56) radial nach außen von dem ringförmigen Basisbereich (42) erstreckt, wobei das Rippenelement eine radial außenliegende Umfangsfläche (58) für ein Fahren auf der Felge aufweist, dadurch gekennzeichnet, daß die Fläche (58) für das Fahren auf der Felge zylindrisch ist und gemessen in Radialrichtung in gleichem Abstand von der radial äußeren Fläche (60, 62) des ringförmigen Basisbereiches (42) angeordnet ist wie die radial äußeren Umfangsflächen (45, 47) der abrolldämpfenden Ringbereiche (44, 46).

2. Geschlossener, torischer Luftreifen nach Anspruch 1 dadurch gekennzeichnet, daß das radial nach außen vorstehende Rippenelement (56) symmetrisch zur Äquatorialebene oder mittleren Umfangsebene (30) des Reifens ist.

3. Geschlossener, torischer Luftreifen nach Anspruch 2, dadurch gekennzeichnet, daß ein sich über den Umfang erstreckendes Rippenelement (54) angeordnet ist, welches symmetrisch zur Äquatorialebene des Reifens ist, und daß das Rippenelement radial nach innen von dem ringförmigen Basisbereich (42) vorsteht und eine geringere axiale Breite aufweist als das radial nach außen vorstehende Rippenelement (56).

4. Geschlossener, torischer Luftreifen nach einem der Ansprüche 1, 2 oder 3, dadurch gekennzeichnet, daß das Verhältnis:

(a) der Summe der axialen Breiten (63, 64, 65) der radial außenliegenden Umfangsflächen der abrolldämpfenden Ringbereiche und des radial nach außen vorstehenden Rippenelementes zu

(b) viermal dem radialen Abstand (59) der radial äußeren Umfangsfläche des radial nach außen vorstehenden Rippenelementes von der radial äußeren Fläche (60, 62) des ringförmigen Basisbereiches (42) zwischen 1,0 und 1,5 ist.

5. Geschlossener, torischer Luftreifen nach einem der Ansprüche 1, 2 oder 3 dadurch gekennzeichnet daß die radial äußere Umfangsfläche (80) des radial nach außen vorstehenden Rippenelementes wenigstens eine sich über den Umfang erstreckende Rille oder Nut (82) aufweist derart, daß die radial äußere Umfangsfläche aufgeteilt ist in eine Vielzahl von Segmenten gegenüber der Drehachse des Reifens, und daß jede Nut oder Rille eine radiale Tiefe (84) aufweist, die geringer ist als der radiale Abstandt (86) der radial äußeren Umfangsfläche des radial nach außen vorstehenden Rippenelementes der radialen außenfläche (60, 62) des ringförmigen Basisbereiches (42).

6. Geschlossener, torischer Luftreifen nach Anspruch 5, dadurch gekennzeichnet, daß das Verhältnis

(a) der Summe der axialen Breiten (63, 64) der radial äußeren Umfangsflächen der abrolldämpfenden Ringbereiche und der axialen Breiten (92, 94, 96) der Segmente der radial äußeren Umfangsfläche des radial nach außen vorstehenden Rippenelementes zu

(b) der Summe von viermal dem radialen Abstand (86) der radial äußeren Umfangsfläche des radial nach außen vorstehenden Rippenelementes von der radial äußeren Fläche des ringförmigen Basisbereiches plus zweimal der Summe der radialen Tief (84) der Rillen oder Nuten zwischen 1,0 und 1,5 ist.

**Revendications**

1. Bandage pneumatique à tore fermé (10) comprenant une carcasse (36) définissant une chambre de gonflage fermée toroïdale (38), cette carcasse comportant une zone de base annulaire (42) avec une surface extérieure radiale (60, 62) et une partie annulaire de limitation de roulis (44, 46) située à chaque extrémité axiale de la zone de base annulaire (42), chaque partie annulaire de limitation de roulis comportant une surface circonférentielle extérieure radiale (45, 47) ; ainsi qu'une nervure circonférentielle (56) ressortant radialement vers l'extérieur à partir de la zone de base annulaire (42), cette nervure comportant une surface circonférentielle extérieure radiale de roulage à plat (58), ce bandage pneumatique étant caractérisé en ce que la surface de roulage à plat (58) est cylindrique et disposée à la même distance de la surface extérieure radiale (60, 62) de la zone de base annulaire (42) que les surfaces circonférentielles extérieures radiales (45, 47) des parties annulaires de limitation de roulis (44, 46), mesurée dans une direction radiale.

2. Bandage pneumatique à tore fermé selon la revendication 1, caractérisé en ce que la nervure ressortant radialement vers l'extérieur (56) est symétrique par rapport au plan circonférentiel médian (30) du bandage pneumatique.

3. Bandage pneumatique à tore fermé selon la revendication 2, caractérisé en ce qu'il comprend également une nervure circonférentielle (54) qui est symétrique par rapport au plan circonférentiel médian du bandage pneumatique, cette nervure ressortant radialement vers l'intérieur à partir de la zone de base annulaire (42) et ayant une largeur axiale inférieure à celle de la nervure ressortant radialement vers l'extérieur (56).

4. Bandage pneumatique à tore fermé selon l'une quelconque des revendications 1, 2 et 3, caractérisé en ce que le rapport de:

(a) la somme des largeurs axiales (63, 64, 65) des surfaces circonférentielles extérieures radiales des parties annulaires de limitation de roulis et de la nervure ressortant radialement vers l'extérieur; à

(b) quatre fois la distance radiale (59) comprise entre la surface circonférentielle extérieure radiale de la nervure ressortant radialement vers l'extérieur et la surface extérieure radiale (60, 62) de la zone de base annulaire (42);
se situe entre 1,0 et 1,5.

5. Bandage pneumatique à tore fermé selon l'une quelconque des revendications 1, 2 et 3, caractérisé en ce que le surface circonférentielle extérieure radiale (80) de la nervure ressortant radialement vers l'extérieur comporte au moins une gorge circonférentielle (82), de telle sorte que cette surface circonférentielle extérieure radiale soit divisée en plusieurs segments par rapport à l'axe de rotation du bandage pneumatique, chaque gorge ayant une profondeur radiale (84) qui est inférieure à la distance radiale (86) comprise entre la surface circonférentielle extérieure radiale de la nervure ressortant radialement vers l'extérieur et la surface extérieure radiale (60, 62) de la zone de base annulaire (42).

6. Bandage pneumatique à tore fermé selon la revendication 6, caractérisé en ce que le rapport de:

(a) la somme des largeurs axiales (63, 64) des surfaces circonférentielles extérieures radiales des parties annulaires de limitation de roulis et des largeurs axiales (92, 94, 96) des segments de la surface circonférentielle extérieure radiale de la nervure ressortant radialement vers l'extérieur; à

(b) la somme de quatre fois la distance radiale (86) comprise entre la surface circonférentielle extérieure radiale de la nervure ressortant radialement vers l'extérieur et une surface extérieure radiale de la zone de base annulaire, plus deux fois la somme des profondeurs radiales (84) de ces gorges;

se situe entre 1,0 et 1,5.

FIG.1

FIG.2

FIG. 3